# EUROPEAN PATENT APPLICATION

(11) **EP 4 727 025 A1**
(43) Date of publication of application: **15.04.2026**
(21) Application number: 24857888.2
(22) Date of filing: 29.05.2024
(51) Int. Cl.: H04B 7/0404, H04B 1/401, H04W 88/06

(54) **COMMUNICATION LINK MANAGEMENT METHOD, SYSTEM, ELECTRONIC DEVICE, STORAGE MEDIUM AND CHIP**

(30) Priority: 29.08.2023 CN 202311101903; 11.09.2023 CN 202311174456
(71) Applicant: Huawei Technologies Co., Ltd., Shenzhen, Guangdong 518129 (CN)
(72) Inventor: WANG, Liang, Shenzhen, Guangdong 518129 (CN); SU, Jiongjin, Shenzhen, Guangdong 518129 (CN); JI, Guohui, Shenzhen, Guangdong 518129 (CN); HUANG, Tao, Shenzhen, Guangdong 518129 (CN)
(74) Representative: Isarpatent
(86) International application number: PCT/CN2024/095892
(87) International publication number: WO 2025/044343

(57) **Abstract**

This application provides a communication link management method, a system, an electronic device, a storage medium, and a chip, and relates to the field of communication technologies. The method is applied to a first electronic device, where the first electronic device is connected to a second electronic device through a first communication link and is connected to a third electronic device through a second communication link. The method includes: performing communication through both the first communication link and the second communication link, where there is a time division multiplexing antenna on the first communication link and the second communication link, and communication protocols used are different; and managing the first communication link based on a connection parameter of the second communication link, so that there is no time division multiplexing antennas on the managed first communication link and the second communication link. The technical solutions provided in this application can avoid mutual impact between the first communication link and the second communication link, and consider communication quality of the first communication link and communication quality of the second communication link.

## Description

This application claims priorities to Chinese Patent Application No. 202311101903.4, filed with the China National Intellectual Property Administration on August 29, 2023 and entitled "COMMUNICATION MANAGEMENT METHOD, ELECTRONIC DEVICE, READABLE STORAGE MEDIUM, AND CHIP", and to Chinese Patent Application No. 202311174456.5, filed with the China National Intellectual Property Administration on September 11, 2023 and entitled "COMMUNICATION LINK MANAGEMENT METHOD, SYSTEM, ELECTRONIC DEVICE, STORAGE MEDIUM, AND CHIP", both of which are incorporated herein by reference in their entireties.

### TECHNICAL FIELD

This application relates to the field of communication technologies, and in particular, to a communication link management method, a system, an electronic device, a storage medium, and a chip.

### BACKGROUND

With development of communication technologies, an electronic device supports establishment of communication links for communication according to a plurality of wireless communication protocols, for example, communication protocols such as wireless fidelity, Bluetooth, and SparkLink. However, due to limitations of internal space and production costs, it is usually impossible to dispose excessive antennas inside the electronic device. Therefore, in the electronic device, when a plurality of communication links established according to different communication protocols perform communication simultaneously, a same antenna may be used in a time division multiplexing manner, that is, the same antenna is used in turn. It may be understood that because different communication links have a contention relationship when a same antenna is used in a time division multiplexing manner, the electronic device cannot consider communication quality of each communication link, resulting in poor user experience.

### SUMMARY

This application provides a communication link management method, a system, an electronic device, a storage medium, and a chip, to resolve a problem in the conventional technology that user experience is poor because an electronic device cannot consider communication quality of each communication link.

To achieve the foregoing objective, this application uses the following technical solutions.

According to a first aspect, an embodiment of this application provides a communication link management method, applied to a first electronic device. The first electronic device is connected to a second electronic device through a first communication link and is connected to a third electronic device through a second communication link. The method includes: performing communication through both the first communication link and the second communication link, where there is a time division multiplexing antenna on the first communication link and the second communication link, and communication protocols used for the first communication link and the second communication link are different; and managing the first communication link based on a connection parameter of the second communication link, so that there is no time division multiplexing antennas on the managed first communication link and the second communication link.

According to the method provided in this embodiment, when the first communication link and the second communication link reuse a same antenna for communication, the first electronic device may manage the first communication link based on the connection parameter of the second communication link, so that the first communication link and the second communication link do not have a time division multiplexing antenna. This avoids mutual impact between the first communication link and the second communication link, and considering communication quality of the first communication link and communication quality of the second communication link.

In some embodiments, managing the first communication link based on the connection parameter of the second communication link includes: adjusting, based on the connection parameter of the second communication link, an antenna used for the first communication link, so that there is no time division multiplexing antennas on the adjusted first communication link and the second communication link; or switching, based on the connection parameter of the second communication link, a communication protocol used for the first communication link, so that the switched first communication link and the second communication link use the antenna in a frequency division multiplexing manner.

In some embodiments, the first communication link includes a first sub-link and a second sub-link, the first sub-link performs communication through a first antenna, the second sub-link performs communication through the second antenna, and the second communication link performs communication through the second antenna. Correspondingly, adjusting, based on the connection parameter of the second communication link, the antenna used for the first communication link includes: disconnecting the second sub-link in the first communication link when the connection parameter of the second communication link is greater than or equal to a threshold, so that the first communication link does not occupy the second antenna.

According to the method provided in this embodiment, the first communication link independently uses the first antenna for communication, and the second communication link independently uses the second antenna for communication. The first communication link and the second communication link do not affect each other, and communication quality of the two communication links can be considered.

In some embodiments, the method further includes: restoring the second sub-link in the first communication link when the connection parameter of the second communication link is less than the threshold; or restoring the second sub-link in the first communication link after the second communication link is disconnected, to increase a data transmission rate of the first communication link.

In some embodiments, both the first communication link and the second communication link perform communication through a first antenna; and correspondingly, adjusting, based on the connection parameter of the second communication link, the antenna used for the first communication link includes: when the connection parameter of the second communication link is greater than or equal to the threshold, switching the first communication link from the first antenna to a second antenna for communication, where the first antenna is different from the second antenna.

According to the method provided in this embodiment, after the first electronic device adjusts the antenna used for the first communication link, the first communication link independently uses the second antenna for communication, and the second communication link independently uses the first antenna for communication. The first communication link and the second communication link do not affect each other, and communication quality of the two communication links can be considered.

In some embodiments, the method further includes: when the connection parameter of the second communication link is restored to being less than the threshold, switching the first communication link from the second antenna back to the first antenna for communication, to avoid impact on another communication link using the second antenna.

In some embodiments, the first electronic device further includes a third communication link to a fourth electronic device, and the third communication link performs communication based on a first connection parameter through the second antenna; and the method further includes: after switching the first communication link from the first antenna to the second antenna for communication, controlling the third communication link to perform communication based on a second connection parameter, where the first connection parameter is greater than the second connection parameter. The method can reduce mutual impact between the first communication link and the third communication link, and consider communication quality of the first communication link and communication quality of the third communication link.

In some embodiments, the method further includes: after the first communication link is disconnected, controlling the third communication link to be restored to perform communication based on the first connection parameter; or after the first communication link is restored to perform communication through the first antenna, controlling the third communication link to be restored to perform communication based on the first connection parameter.

In some embodiments, both the first communication link and the second communication link perform communication through a first antenna; and correspondingly, switching, based on the connection parameter of the second communication link, the communication protocol used for the first communication link includes: when the connection parameter of the second communication link is greater than or equal to a threshold, switching the communication protocol used for the first communication link, so that the first communication link and the second communication link use the first antenna in a frequency division multiplexing manner.

In some embodiments, the first electronic device further includes a third communication link to a fourth electronic device, and the third communication link performs communication through a second antenna; and the method further includes: when the connection parameter of the second communication link is greater than or equal to a threshold, switching a communication protocol and an antenna that are used for the first communication link, so that the first communication link and the third communication link use the second antenna in a frequency division multiplexing manner.

In some embodiments, the method further includes: displaying query information, where the query information is used to query whether a user agrees to switch the communication protocol used for the first communication link; and switching, in response to a confirmation operation, the communication protocol used for the first communication link. The method has good user experience.

In some embodiments, the connection parameter includes at least one of: a communication frequency, a bit rate, and a communication duty cycle.

In some embodiments, a priority of the first communication link is lower than a priority of the second communication link.

In some embodiments, a factor for determining a priority of a communication link includes a quantity of sub-links on the communication link and/or a priority of a service processed on the communication link.

According to a second aspect, this application provides a communication system, including a first electronic device, a second electronic device, and a third electronic device, where the first electronic device is connected to the second electronic device through a first communication link, and the first electronic device is connected to the third electronic device through a second communication link; and the first electronic device is configured to: perform communication through both the first communication link and the second communication link, where there is a time division multiplexing antenna on the first communication link and the second communication link, and communication protocols used for the first communication link and the second communication link are different; and manage the first communication link based on a connection parameter of the second communication link, so that there is no time division multiplexing antennas on the managed first communication link and the second communication link.

According to a third aspect, an embodiment of this application further provides a communication link management apparatus, where the apparatus includes:
a first management module, configured to control an electronic device to perform communication through both a first communication link and a second communication link, where there is a time division multiplexing antenna on the first communication link and the second communication link, and communication protocols used for the first communication link and the second communication link are different; and
a second management module, configured to manage the first communication link based on a connection parameter of the second communication link, so that there is no time division multiplexing antennas on the managed first communication link and the second communication link.

According to a fourth aspect, an embodiment of this application provides an electronic device, including a memory, a processor, and a computer program that is stored in the memory and that is runnable on the processor. When the processor executes the computer program, the method according to the first aspect is implemented.

According to a fifth aspect, an embodiment of this application provides a computer-readable storage medium. The computer-readable storage medium stores a computer program. When the computer program is executed by a processor, the method according to the first aspect is implemented.

According to a sixth aspect, an embodiment of this application provides a computer program product. The computer program product stores a computer program. When the computer program is run by an electronic device, the electronic device can be enabled to perform the method according to the first aspect.

According to a seventh aspect, an embodiment of this application provides a chip. The chip includes a processor and a memory. The memory stores a computer program. When the computer program is executed by the processor, the method according to the first aspect is implemented.

It may be understood that, for beneficial effects of the second aspect to the seventh aspect, refer to related descriptions in the first aspect. Details are not described herein again.

### BRIEF DESCRIPTION OF DRAWINGS

FIG. 1A and FIG. 1B are diagrams of structures of communication links according to different embodiments of this application;
FIG. 2 is a diagram of a structure of a communication system according to an embodiment of this application;
FIG. 3A and FIG. 3B are diagrams of structures of communication systems according to other embodiments of this application;
FIG. 4 is a diagram of a structure of an electronic device according to an embodiment of this application;
FIG. 5 is a diagram of a structure of a tablet computer according to an embodiment of this application;
FIG. 6 is a diagram of a communication scenario of a tablet computer according to an embodiment of this application;
FIG. 7 is a diagram of writing handwriting corresponding to pressure-sensitive data with different returns according to an embodiment of this application;
FIG. 8 is a diagram of a communication scenario of a tablet computer according to another embodiment of this application;
FIG. 9 is a schematic flowchart of a communication link management method according to an embodiment of this application;
FIG. 10 is a diagram of a communication link management scenario according to an embodiment of this application;
FIG. 11 is a diagram of data reception and transmission on a communication link according to an embodiment of this application;
FIG. 12 is a diagram of a communication link management scenario according to another embodiment of this application;
FIG. 13 is a diagram of a communication link management scenario according to still another embodiment of this application;
FIG. 14A to FIG. 14C are diagrams of an update process of a connection parameter of a communication link according to different embodiments of this application;
FIG. 15 is a diagram of a structure of a tablet computer according to another embodiment of this application;
FIG. 16 is a diagram of a communication link management scenario according to an embodiment of this application;
FIG. 17 is a diagram of a communication link management scenario according to another embodiment of this application;
FIG. 18 is a diagram of a display interface of a tablet computer according to an embodiment of this application;
FIG. 19 is a diagram of a communication link management apparatus according to an embodiment of this application; and
FIG. 20 is a diagram of a structure of a chip according to an embodiment of this application.

### DESCRIPTION OF EMBODIMENTS

The following describes technical solutions provided in embodiments of this application with reference to the accompanying drawings.

It should be understood that, in the description of embodiments of this application, "/" represents "or", unless otherwise specified. For example, A/B may represent A or B. In this specification, "and/or" describes only an association relationship between associated objects, and represents that three relationships may exist. For example, A and/or B may represent the following three cases: Only A exists, both A and B exist, and only B exists.

The terms "first" and "second" in embodiments are merely intended for a purpose of description, and shall not be understood as an indication or an implication of relative importance or an implicit indication of a quantity of indicated technical features. Therefore, a feature limited by "first" or "second" may explicitly or implicitly include one or more such features. In the description of embodiments, unless otherwise specified, "a plurality of" means two or more.

For ease of description, the following explains and describes some terms in this application.

### (1) Wireless communication protocol

A wireless communication protocol is a communication standard for connecting an electronic device to a wireless network, and is referred to as a communication protocol for short. In embodiments, the wireless communication protocol includes but is not limited to wireless fidelity (wireless fidelity, Wi-Fi) 2.4G, Wi-Fi 5G, classic Bluetooth (Bluetooth, BT), Bluetooth low energy (Bluetooth low energy, BLE), SparkLink basic (SparkLink-basic, SLB), SparkLink-low energy (SparkLink-low energy, SLE), ZigBee (ZigBee), and the like. Communication frequency bands of the Wi-Fi 2.4G communication protocol, the BT communication protocol, the SLE communication protocol, and the ZigBee communication protocol are basically about 2.4 GHz, and communication frequency bands of the Wi-Fi 5G communication protocol are about 5 GHz.

### (2) Wireless communication link

A wireless communication link is a link established between electronic devices based on a wireless communication protocol, and is referred to as a communication link or link for short. The electronic device may establish different types of communication links based on different wireless communication protocols. For example, the electronic device may establish different types of communication links such as a Wi-Fi 2.4G link, a Wi-Fi 5G link, a BT link, a BLE link, an SLB link, an SLE link, and a ZigBee link based on the foregoing communication protocols such as Wi-Fi 2.4G, Wi-Fi 5G, BT, BLE, SLB, SLE and ZigBee. A specific type of a communication protocol and a specific type of a communication link that are used in a communication process of the electronic device are not limited in embodiments of this application.

### (3) SISO link and MIMO link

In embodiments, according to different quantities and forms of data transmission paths in the communication links, the communication links include: a single-input single-output (single-input single-output, SISO) link and a multiple-input multiple-output (multiple-input multiple-output, MIMO) link. The following separately describes the links.

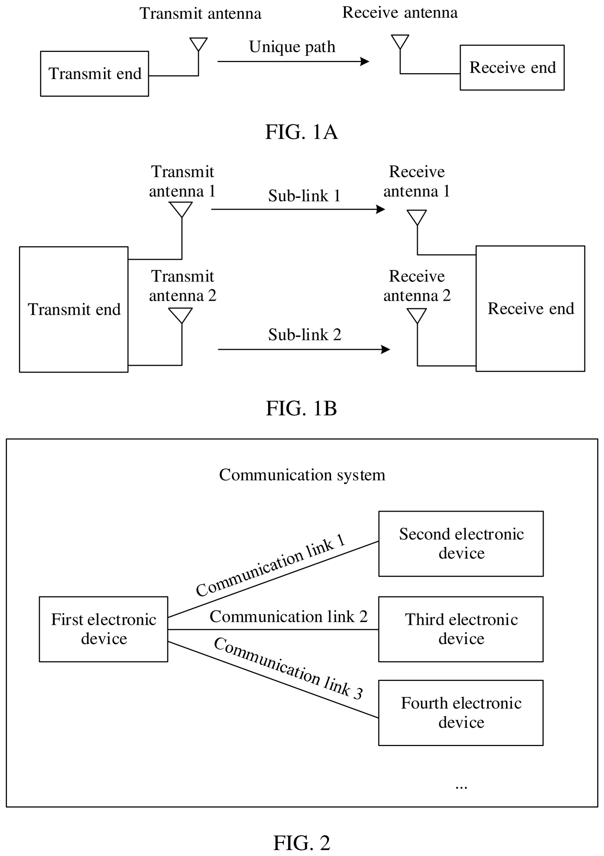

The SISO link is a single-transmit single-receive link. For example, refer to FIG. 1A. On a SISO link, a transmitter end provides a transmit antenna, a receiver end provides a receive antenna, and a path between the transmit antenna and the receive antenna is unique. It may be understood that because the SISO link has only one data transmission path, a communication rate of the SISO link is usually limited.

The MIMO link is a multi-transmit multi-receive link. For example, refer to FIG. 1B. On a MIMO link, a transmitter end provides at least two transmit antennas, for example, a transmit antenna 1 and a transmit antenna 2, and a receiver end provides at least two receive antennas, for example, a receive antenna 1 and a receive antenna 2. Based on this, the MIMO link may include a sub-link 1 between the transmit antenna 1 and the receive antenna 1, and a sub-link 2 between the transmit antenna 1 and the receive antenna 2. One sub-link is a data transmission path.

It should be noted that, because there are a plurality of sub-links in the MIMO link, an electronic device may transmit data through all the plurality of sub-links when using the MIMO link for communication. Therefore, the MIMO link can improve a system capacity, coverage, and a signal-to-noise ratio without increasing an occupied bandwidth, thereby improving a communication rate.

The MIMO link including the two sub-links shown in FIG. 1B is used as an example. When the electronic device uses the MIMO link for communication, to-be-sent data is usually divided into two parts, and the two parts are sent through both the sub-link 1 and the sub-link 2. After receiving the data through the two sub-links, the receiver end may obtain complete data after integrating the data. However, if one sub-link in the MIMO link is abnormal, the receiver end loses one path of data, affecting transmission effect of the entire communication link.

### (4) Multiplexing technology

A multiplexing technology is used to transmit a plurality of signals on a limited transmission resource. The multiplexing technology includes but is not limited to a time division multiplexing (time division multiplexing, TDM) technology and a frequency division multiplexing (frequency division multiplexing, FDM) technology. Details are described below.

In time division multiplexing TDM, a time is divided into a plurality of slots (Slots). Each slot is used to transmit a signal. Each signal is transmitted in a slot allocated to the signal, and different signals are distinguished by using different slots. A receiver end parses and restores an original signal based on the slot. The time division multiplexing is applicable to scenarios that have high requirements on real-time performance, such as telephone communication and data transmission.

In frequency division multiplexing FDM, an available spectrum is divided into a plurality of non-overlapping subcarrier frequency bands, and each subcarrier frequency band is used to transmit one signal. Each signal is transmitted on a frequency band allocated to the signal, and different signals are distinguished by using different frequency bands. The receiver end parses and restores the original signal based on the frequency band. The frequency division multiplexing is applicable to scenarios in which a signal has low requirements on a bandwidth, such as television broadcasting and radio communication.

In a word, for the time division multiplexing, signals are distinguished based on different slots, and for the frequency division multiplexing, signals are distinguished based on different frequency bands. The time division multiplexing and the frequency division multiplexing are different in signal transmission modes and application scenarios. Which technology is selected depends on specific communication requirements and resource restrictions.

Based on the foregoing descriptions, the following specifically explains and describes the technical solutions provided in embodiments of this application.

With development of communication technologies, one electronic device may establish a plurality of different communication links with a plurality of other electronic devices based on different communication protocols, to form a multi-link communication system.

FIG. 2 is a diagram of a structure of a communication system according to an embodiment of this application. The communication system includes a first electronic device, a second electronic device, a third electronic device, a fourth electronic device, and the like, where the first electronic device is connected to other electronic devices separately through a same communication link or different communication links. For example, the first electronic device is connected to the second electronic device through a communication link 1, the first electronic device is connected to the third electronic device through a communication link 2, and the first electronic device is connected to the fourth electronic device through a communication link 3. In addition, other electronic devices other than the first electronic device may be connected to each other or may not be connected to each other. In embodiments, a type of each communication link in the communication system is not limited, and a quantity of electronic devices in the communication system is not limited either.

In embodiments, the electronic device may be a terminal device like a mobile phone, a tablet computer, a wearable device (for example, a smartwatch), a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA), or may be a peripheral device like a mouse, a keyboard, a stylus, or a sound box, or may be a router or a gateway device. A specific type of the electronic device is not limited in embodiments of this application.

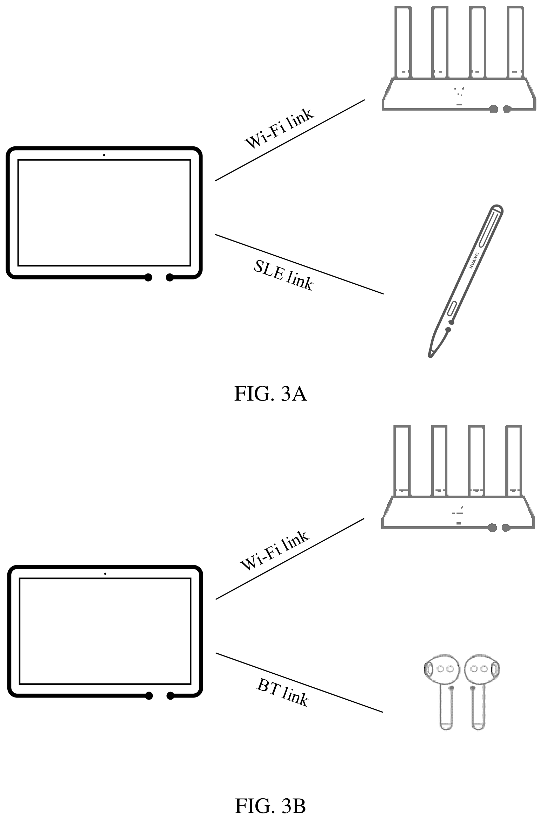

In an example, refer to FIG. 3A. In the communication system, the first electronic device is a tablet computer, the second electronic device is a router, and the third electronic device is a stylus. On one hand, the tablet computer is connected to the router through a Wi-Fi link, to upload/download audio/videos, pictures, files, and web page data, and the like. On the other hand, the tablet computer is connected to the stylus through an SLE link, to receive pressure-sensitive data that is fed back by the stylus and that is on a screen. It should be noted that, when a user writes on the screen of the electronic device (for example, the tablet computer or the mobile phone) with the stylus, a nib of the stylus imposes pressure on the screen, and a value of the pressure is the pressure-sensitive data. The pressure-sensitive data is usually detected by the stylus and sent to the electronic device. The tablet computer can display writing handwriting of the stylus based on a movement track and pressure-sensitive data of the stylus on the screen. Usually, higher pressure of the stylus on the screen indicates thicker handwriting displayed on the tablet computer. On the contrary, lower pressure of the stylus on the screen indicates thinner handwriting displayed on the tablet computer.

In another example, refer to FIG. 3B. In the communication system, the first electronic device is a tablet computer, the second electronic device is a router, and the third electronic device is a Bluetooth headset. On one hand, the tablet computer is connected to the router through a Wi-Fi link, to upload/download audio/videos, pictures, files, and web page data. On the other hand, the tablet computer is connected to the Bluetooth headset through a BT link, and sends high-definition audio to the Bluetooth headset, so that a user can listen to the audio.

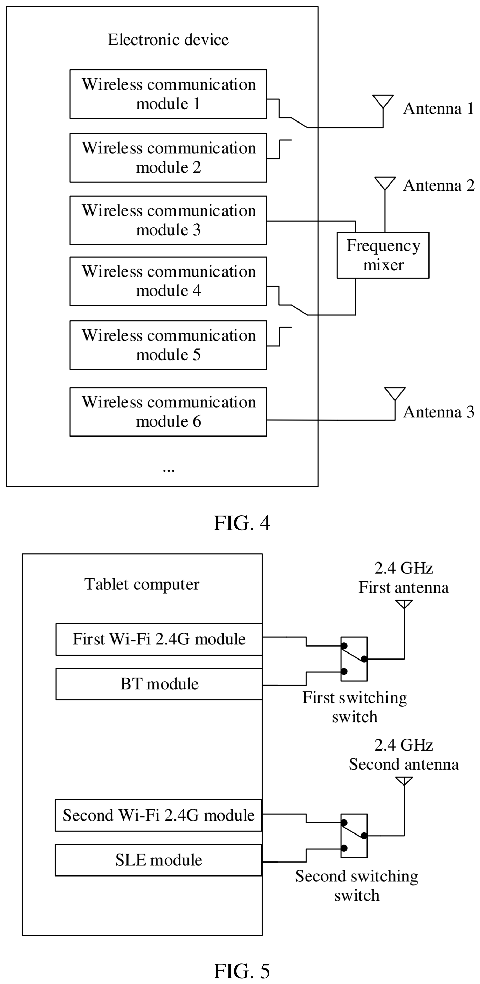

FIG. 4 is a diagram of a structure of an electronic device according to an embodiment of this application. The electronic device includes a plurality of wireless communication modules and a plurality of antennas. Communication protocols used by the wireless communication modules may be the same or may be different. Working frequencies of the antennas may be the same or may be different. In addition, each communication module is connected to an antenna that adapts to a communication frequency band used for a communication protocol of the communication module.

For example, the plurality of communication modules include a wireless communication module 1 to a wireless communication module 6, and the plurality of antennas include an antenna 1 to an antenna 3. These communication modules may be Wi-Fi 2.4G communication modules, Wi-Fi 5G communication modules, BT communication modules, BLE communication modules, SLB communication modules, SLE communication modules, ZigBee communication modules, and the like. The working frequency of each antenna may be 2.4 GHz, 5 GHz, or the like. This is not limited in embodiments. These wireless communication modules may be understood as cores (cores) in a corresponding communication chip. For example, the Wi-Fi 2.4G communication module is a Wi-Fi 2.4G core, and the Wi-Fi 5G communication module is a Wi-Fi 5G core.

It should be noted that, although not shown in the figure, in addition to the foregoing wireless communication modules and antennas, the electronic device may further include other components, for example, one or more of a processor, an external memory interface, an internal memory, a universal serial bus (universal serial bus, USB) interface, a charging management module, a power management module, a battery, another antenna, another wireless communication module, a mobile communication module, an audio module, a speaker, a receiver, a microphone, a headset jack, various sensor modules, a button, a motor, an indicator, a camera, a display, a subscriber identification module (subscriber identification module, SIM) card interface, and the like. The structure shown in this embodiment of this application does not constitute a specific limitation on the electronic device.

Currently, due to limitations of internal space and production costs, it is usually impossible to dispose excessive antennas inside the electronic device. Therefore, when working simultaneously, different wireless communication modules may separately use one antenna to receive or send a signal, or may reuse a same antenna to receive or send a signal. That different wireless communication modules reuse the same antenna includes using the same antenna in a time division multiplexing manner and using the same antenna in a frequency division multiplexing manner.

For example, as shown in FIG. 4, the wireless communication module 1 and the wireless communication module 2 are connected to the antenna 1 via a switching switch. When the wireless communication module 1 and the wireless communication module 2 work simultaneously, the antenna 1 is used in a time division multiplexing manner. In addition, the wireless communication module 3 is connected to a frequency mixer. The wireless communication module 4 and the wireless communication module 5 are first connected to a switching switch, and then connected to the frequency mixer via the switching switch. The frequency mixer is connected to the antenna 2. It may be understood that, when the wireless communication module 4 and the wireless communication module 5 work simultaneously, the antenna 2 is used in a time division multiplexing manner; and when the wireless communication module 3 and the wireless communication module 4 or the wireless communication module 5 work simultaneously, the wireless communication module 3 and the wireless communication module 4 or the wireless communication module 5 use the antenna 2 in a frequency division multiplexing manner. The wireless communication module 6 is separately connected to the antenna 3.

However, in a process of using a same antenna in a time division multiplexing manner, there is a competition relationship between the wireless communication modules. It may be understood that if a time for occupying an antenna by a wireless communication module is increased, a data transmission rate of the wireless communication module is increased, and communication quality is also improved accordingly. However, a time for occupying the antenna by another wireless communication module is reduced, and communication quality is reduced. Therefore, in some communication scenarios in which an antenna is used in a time division multiplexing manner, the electronic device cannot consider communication quality of different communication links, resulting in poor user experience.

For example, the electronic device is a tablet computer. Refer to FIG. 5. A short-range communication chip (namely, a Connectivity Combo chip) of the tablet computer includes a first Wi-Fi 2.4G module (a Wi-Fi Core 0), a second Wi-Fi 2.4G module (a Wi-Fi Core 1), a BT module, an SLE module, a first antenna ant0, and a second antenna ant1. The first Wi-Fi 2.4G module and the second Wi-Fi 2.4G module support communication according to a Wi-Fi 2.4G protocol, and both the first antenna and the second antenna are 2.4 GHz antennas.

The first Wi-Fi 2.4G module and the BT module are jointly connected to the first antenna via a first switching switch. Specifically, when the first Wi-Fi 2.4G module uses the first antenna, the electronic device controls the first switching switch to connect the first Wi-Fi 2.4G module to the first antenna, so that the first antenna receives or sends a Wi-Fi 2.4G signal; and when the BT module uses the first antenna, the electronic device controls the first switching switch to connect the BT module to the first antenna, so that the first antenna receives or sends a BT signal.

In addition, the second Wi-Fi 2.4G module and the SLE module are jointly connected to the second antenna via a second switching switch. Specifically, when the second Wi-Fi 2.4G module uses the second antenna, the electronic device controls the second switching switch to connect the second Wi-Fi 2.4G module to the second antenna, so that the second antenna receives or sends a Wi-Fi 2.4G signal; and when the SLE module uses the second antenna, the electronic device controls the second switching switch to connect the SLE module to the second antenna, so that the second antenna receives or sends an SLE signal.

Based on the electronic device structure shown in FIG. 5, the tablet computer may simultaneously use time division multiplexing antennas of a plurality of different communication links for communication.

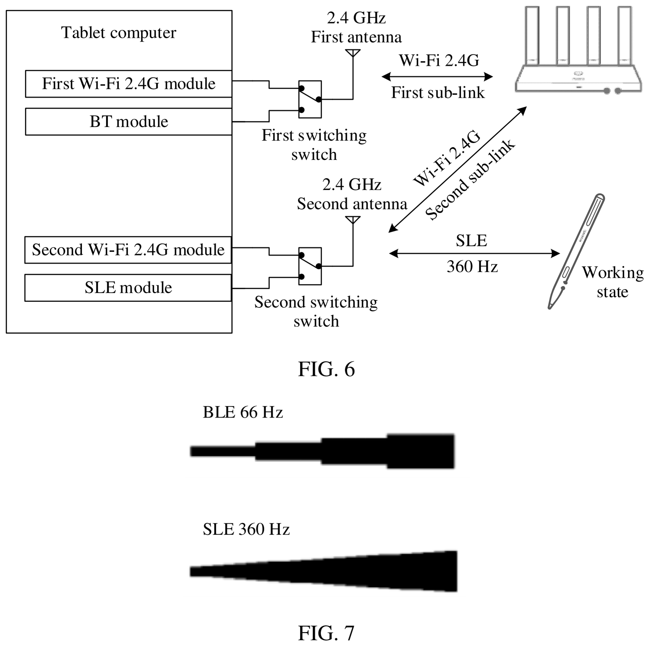

In an example, refer to FIG. 6. The tablet computer is connected to a router through a Wi-Fi 2.4G link and is connected to a stylus through an SLE link. The Wi-Fi 2.4G link is a MIMO link, and includes a first sub-link established by a first Wi-Fi 2.4G module with the router through a first antenna, and a second sub-link established by a second Wi-Fi 2.4G module with the router through a second antenna. It can be learned that when the Wi-Fi 2.4G link and the SLE link work simultaneously, the second antenna is used in a time division multiplexing manner.

The stylus on the SLE link enters a sleep state when the stylus is still or is being charged. In the sleep state, the stylus only needs to maintain a basic communication connection to the tablet computer, and the stylus does not need to frequently report pressure-sensitive data to the tablet computer. Therefore, a frequency of communication between the tablet computer and the stylus on the SLE link is low. For example, the frequency of communication between the tablet computer and the stylus is 2.67 Hz, that is, the tablet computer communicates with the stylus at an interval of 375 ms, to ensure that the SLE link is not disconnected. It may be understood that, when the stylus is in the sleep state, the SLE link occupies the second antenna less frequently, and the SLE link does not affect communication of the second sub-link in the Wi-Fi 2.4G link.

However, the stylus enters a working state during movement. In the working state, the stylus needs to continuously report pressure-sensitive data to the tablet computer, so that the tablet computer displays a thickness of writing handwriting based on the pressure-sensitive data. For example, to ensure that the thickness of the writing handwriting displayed on the tablet computer changes smoothly, and that writing details of writing starting and ending of a user are not lost, the stylus reports the pressure-sensitive data to the tablet computer in the working state at a communication frequency of 360 Hz, that is, the stylus reports the pressure-sensitive data to the tablet computer at an interval of 2.78 ms. It may be understood that, when the communication frequency of the SLE link is high, the SLE link frequently occupies the second antenna, and consequently the second Wi-Fi 2.4G module is frequently interrupted to receive or send data through the second antenna. Consequently, data transmission of the second sub-link in the Wi-Fi 2.4G link is severely affected, and data transmission of the Wi-Fi 2.4G link is abnormal.

It should be noted that, in this embodiment, the communication frequency at which the stylus reports the pressure-sensitive data to the tablet computer may also be referred to as a return rate. It may be understood that a higher return rate of the stylus on the pressure-sensitive data indicates a smoother change in the thickness of the writing handwriting displayed by the tablet computer; and on the contrary, a lower frequency of the stylus on the pressure-sensitive data indicates a more abrupt change in the thickness of the writing handwriting displayed by the tablet computer. For example, as shown in FIG. 7, compared with a return rate of 66 Hz, when the return rate is 360 Hz, a thickness change of the handwriting displayed by the tablet computer based on the pressure-sensitive data is smoother, and writing details of the user can be more reflected.

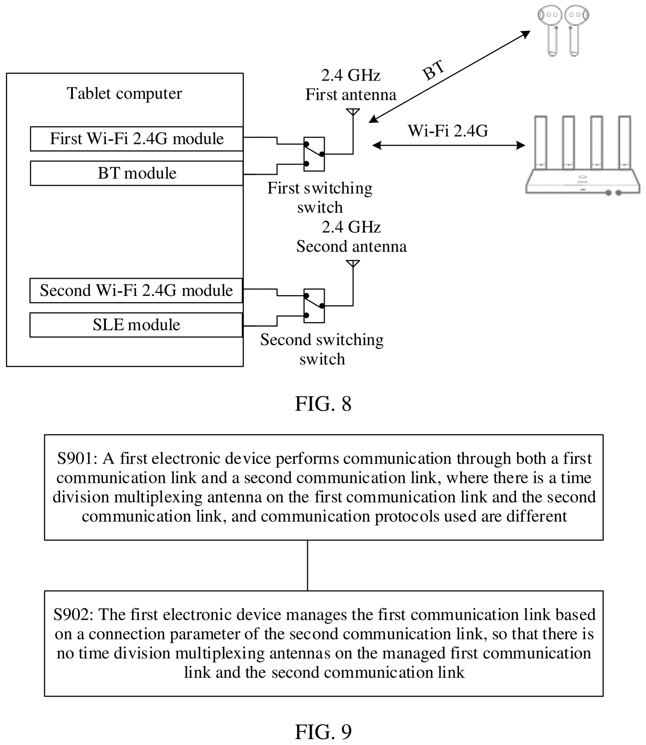

In another example, refer to FIG. 8. The tablet computer is connected to a router through a Wi-Fi 2.4G link and is connected to a Bluetooth headset through a BT link. The Wi-Fi 2.4G link is a SISO link, and is a communication link established by a first Wi-Fi 2.4G module of the tablet computer with the router through a first antenna. The BT link is a communication link established by a BT module of the tablet computer with the Bluetooth headset through the first antenna. It can be learned that when the Wi-Fi 2.4G link and the BT link perform communication simultaneously, the first antenna is used in a time division multiplexing manner.

When the Wi-Fi 2.4G link and the BT link perform communication simultaneously, if a connection parameter of the BT link is small, for example, a communication frequency is low, a bit rate of audio transmission is small, or a duty cycle in a data transmission process is small, the BT link occupies the first antenna less frequently. In this case, the BT link usually does not affect communication of the Wi-Fi 2.4G link. However, when a connection parameter of the BT link is large, for example, a communication frequency is high, a bit rate of audio transmission is large, or a duty cycle in a data transmission process is large, the BT link occupies the first antenna more frequently. As a result, a time for using the first antenna by the Wi-Fi 2.4G link is significantly shortened, severely affecting communication quality of the Wi-Fi 2.4G link is severely affected, and even causing a serious consequence of a Wi-Fi network access failure.

In conclusion, when different communication links perform communication simultaneously, because the antenna is used in a time division multiplexing manner, the electronic device may fail to consider communication quality of a plurality of communication links, affecting user experience.

Therefore, embodiments of this application provide a communication link management method. According to the method, when an electronic device performs communication through a plurality of different types of communication links, and these communication links use a same antenna in a time division multiplexing manner, one of the communication links can be adjusted, to consider communication quality of the plurality of communication links.

The following describes the method provided in embodiments of this application by using an example in which a first electronic device is connected to a second electronic device through a first communication link and is connected to a third electronic device through a second communication link.

FIG. 9 is a schematic flowchart of a communication link management method according to an embodiment of this application. The method includes the following steps S901 and S902.

S901: A first electronic device performs communication through both a first communication link and a second communication link, where there is a time division multiplexing antenna on the first communication link and the second communication link, and communication protocols used for the first communication link and the second communication link are different.

For example, the first communication link is a Wi-Fi 2.4G link, and the second communication link is an SLE link. Alternatively, the first communication link is a Wi-Fi 2.4G link, and the second communication link is a BT link. In addition, there may be one or more time division multiplexing antennas on the first communication link and the second communication link. This is not limited in embodiments.

S902: The first electronic device manages the first communication link based on a connection parameter of the second communication link, so that there is no time division multiplexing antennas on managed first communication link and the second communication link.

In embodiments, a connection parameter of a communication link includes but is not limited to at least one of parameters such as a communication frequency, a bit rate, and a communication duty cycle. The following separately describes the connection parameters.

A communication frequency represents a quantity of communications in unit time. For example, a communication frequency 66 Hz (hertz) represents that 66 signal receptions or transmissions are performed per second, and duration of each time of signal receiving or sending is a preset value, for example, 20 ms (millisecond). A higher communication frequency of an electronic device indicates a smaller interval (interval) between two adjacent communications. On the contrary, a lower communication frequency of the electronic device indicates a larger interval. For example, when the communication frequency of the electronic device is 66 Hz, the interval≈15.16 ms; or when the communication frequency of the electronic device is 360 Hz, the interval≈2.78 ms.

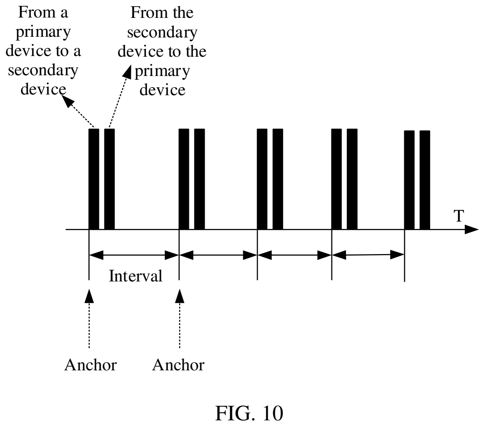

The communication interval (interval) is a difference between two adjacent anchor times (anchor times). An SLE link is used as an example. Refer to FIG. 10. The SLE link uses a communication mechanism of timing reception and transmission for communication, that is, two communicating electronic devices initiate communication only at a fixed anchor time. An interval (interval) between two adjacent anchor times is usually fixed. A communication process includes a signal transmission process and a signal reception process, and the signal reception process or the signal reception process occupies one or more slots (Slots). For example, one slot is 125 µs. SLE communication is used as an example, in a signal transmission process, a primary device (Master) sends a signal to a secondary device (Slave); and in a signal reception process, the secondary device (Slave) sends a signal to the primary device.

A bit rate represents an amount of video or audio data transferred in a unit time, and is generally expressed in units such as Kbps (kilobit per second) and Mbps (megabit per second). The bit rate is related to definition and a compression format of a video. Generally, a higher bit rate indicates a clearer video in a same compression format.

A communication duty cycle represents a ratio of a signal reception/transmission time during each time of communication to an interval between two adjacent communications. A larger duty cycle indicates better communication effect of a communication link.

Based on the foregoing connection parameter, the first electronic device may manage the first communication link when the connection parameter is greater than a threshold, so that the managed first communication link and the second communication link do not have the time division multiplexing antenna.

Optionally, in two communication links that use a same antenna in a time division multiplexing manner, the electronic device may determine, based on priorities of the two communication links, a communication link with a lower priority as a to-be-adjusted communication link. For example, the priority of the communication link may be determined based on factors such as a quantity of sub-links in the communication link and a processed service. In some embodiments, a larger quantity of sub-links in a communication link indicates higher flexibility and adjustability of the communication link, and therefore a lower priority. For example, a priority of a SISO link is higher than that of a MIMO link. Alternatively, in a case in which quantities of sub-links are the same, a priority of a communication link for processing high-definition audio is higher than a priority of another communication link.

Based on this, in S902, when a priority of the first communication link is lower than a priority of the second communication link, the electronic device manages the first communication link based on the connection parameter of the second communication link, so that the managed first communication link and the second communication link do not have the time division multiplexing antenna.

In this embodiment, the electronic device may manage the first communication link in at least two manners. One manner is to keep a communication protocol for the first communication link unchanged, and adjust an antenna used for the first communication link, so that the first communication link and the second communication link use different antennas, thereby avoiding mutual impact between the first communication link and the second communication link. Another manner is to switch a communication protocol for the first communication link, so that the first communication link and the second communication link or another communication link use an antenna in a frequency division multiplexing manner, thereby avoiding mutual impact between the first communication link and the second communication link.

**Manner 1: Keep the communication protocol for the first communication link unchanged, and adjust the antenna used for the first communication link.**

**Example 1: The first communication link is a MIMO link, and the second communication link is a SISO link.**

In this embodiment, the first communication link includes a first sub-link and a second sub-link, where the first sub-link performs communication through a first antenna, and the second sub-link performs communication through the second antenna. The second communication link performs communication through the second antenna. The first communication link and the second communication link work simultaneously, and reuse the second antenna. Based on this, when the connection parameter of the second communication link is greater than the threshold, for example, when a communication frequency is greater than a communication frequency threshold, the first electronic device disconnects the second sub-link in the second communication link. Then, the first communication link independently uses the first antenna for communication, the second communication link independently uses the second antenna for communication, and the two communication links do not affect each other.

Optionally, when the connection parameter of the second communication link is restored to being less than the threshold, for example, when the communication frequency of the second communication link is restored to being less than the communication frequency threshold, the second sub-link in the first communication link is restored. Alternatively, the second sub-link in the first communication link is restored after the second communication link is disconnected, to increase a data transmission rate of the first communication link.

The following describes the method provided in this embodiment by using an example in which the first electronic device is the tablet computer shown in FIG. 5, the second electronic device is a router, and the third electronic device is a stylus. A Wi-Fi 2.4G link between the tablet computer and the router is the first communication link, and an SLE link between the tablet computer and the stylus is the second communication link.

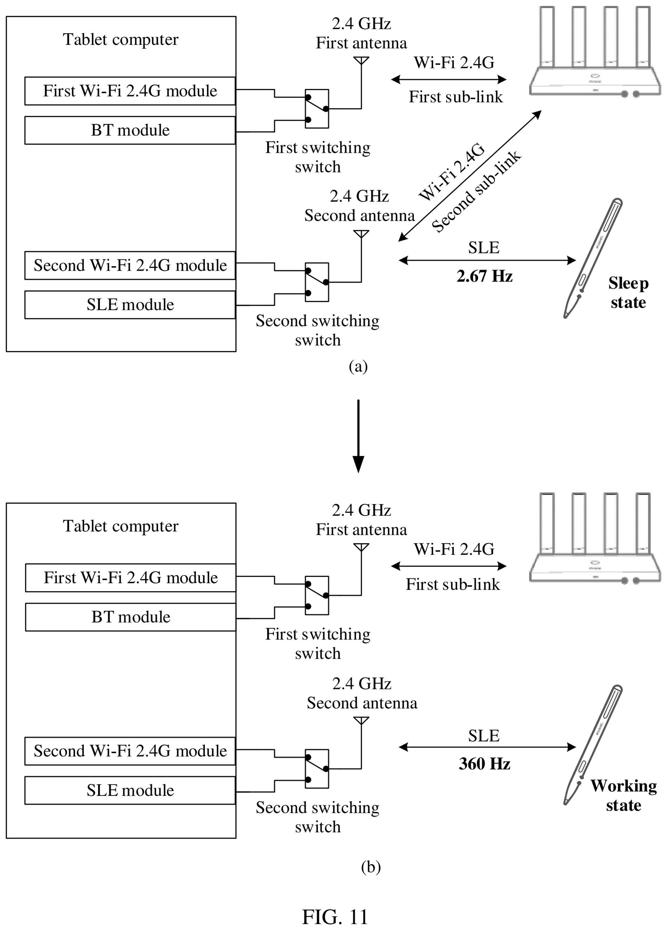

Refer to (a) in FIG. 11. The tablet computer is connected to the router through the Wi-Fi 2.4G link and is connected to the stylus through the SLE link. The Wi-Fi 2.4G link is a MIMO link and includes a first sub-link and a second sub-link. The first sub-link is a communication link established by the first Wi-Fi 2.4G module with the router through the first antenna, and the second sub-link is a communication link established by the second Wi-Fi 2.4G module with the router through the second antenna. The SLE link is a SISIO link and is a communication link established by the SLE module with the stylus through the second antenna. It can be learned that the Wi-Fi 2.4G link and the SLE link reuse the second antenna.

In the foregoing communication scenario, based on the foregoing description, it can be learned that when the stylus is in the sleep state, the stylus communicates with the tablet computer at a communication frequency of 2.67 Hz, so that the stylus and the tablet computer maintain a basic communication connection. At 2.67 Hz, an interval (interval) of communication between the stylus and the tablet is 375 ms. However, after the stylus is switched from the sleep state to the working state, the stylus sends the pressure-sensitive data to the tablet computer at a high communication frequency (for example, 360 Hz) through the SLE link. In this process, data reception and transmission through the second sub-link are frequently interrupted, severely affecting Wi-Fi performance. Therefore, to ensure overall communication quality of the Wi-Fi 2.4G link, when the tablet computer detects that the communication frequency of the SLE link is greater than the communication frequency threshold, the tablet computer controls to disconnect the second sub-link in the Wi-Fi 2.4G link, to ensure the communication quality of the Wi-Fi 2.4G link.

Refer to (b) in FIG. 11. After the tablet computer disconnects the second sub-link in the Wi-Fi 2.4G link, the Wi-Fi 2.4G link independently uses the first antenna to communicate with the router, and the MIMO link changes to the SISO link. In addition, the SLE link independently uses the second antenna to communicate with the stylus. In this case, the Wi-Fi 2.4G link and the SLE link do not affect each other.

Optionally, after being switched from the working state to the sleep state, the stylus does not send the pressure-sensitive data to the tablet computer through the SLE link. Therefore, the SLE link occupies the second antenna less frequently. Based on this, the tablet computer may restore the previously disconnected second sub-link, and switch the Wi-Fi 2.4G link from the SISO link back to the MIMO link. Alternatively, after the SLE link is disconnected, the previously disconnected second sub-link is restored, and the Wi-Fi 2.4G link is switched back to the MIMO link from the SISO link, to increase a rate of data transmission between the tablet computer and the router.

In this embodiment, the tablet computer dynamically switches a connection mode of the Wi-Fi 2.4G link based on communication frequencies of the stylus in different working states on the SLE link, to obtain optimal comprehensive communication effect of the SLE and Wi-Fi 2.4G, so as to improve comprehensive experience of the user in using the stylus and accessing the internet by using Wi-Fi.

**Example 2: Both the first communication link and the second communication link are SISO links.**

In this embodiment, both the first communication link and the second communication link are SISO links, and reuse the first antenna. Based on this, when the connection parameter of the second communication link is greater than the threshold, for example, when a bit rate is greater than a bit rate threshold, the electronic device may switch the first communication link from the first antenna to the second antenna for communication. Both the first antenna and the second antenna adapt to a communication protocol used for the first communication link, but the first antenna and the second antenna are different antennas. Then, the first communication link independently uses the second antenna for communication, the second communication link independently uses the first antenna for communication, and the two communication links do not affect each other, thereby ensuring communication quality of the two communication links.

The following describes the method provided in this embodiment by using an example in which the first electronic device is the tablet computer shown in FIG. 5, the second electronic device is a router, and the third electronic device is a Bluetooth headset. A Wi-Fi 2.4G link between the tablet computer and the router is the first communication link, and a BT link between the tablet computer and the Bluetooth headset is the second communication link.

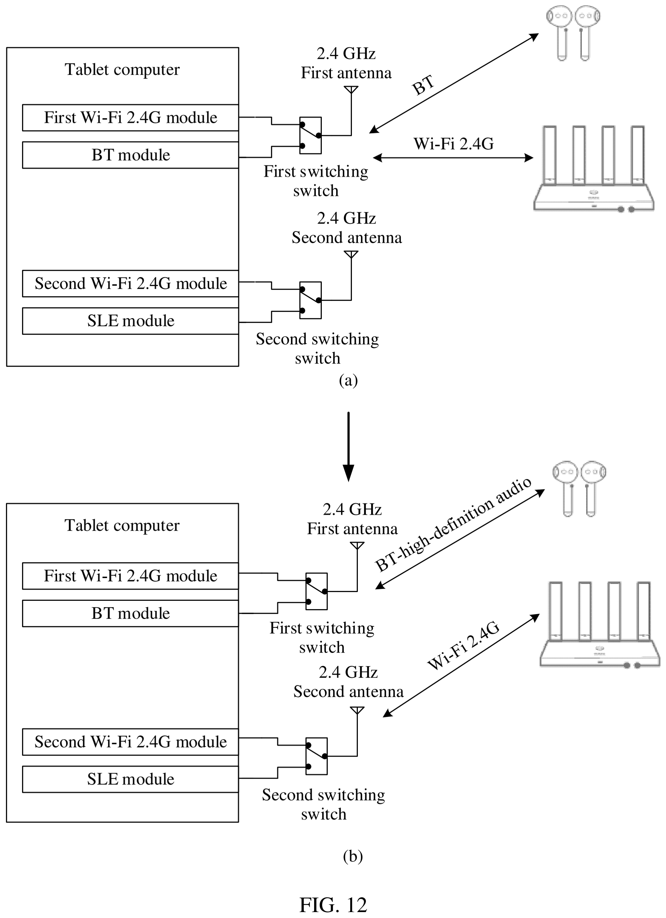

Refer to (a) in FIG. 12. The tablet computer is connected to the router through the Wi-Fi 2.4G link and is connected to the Bluetooth headset through the BT link. Both the Wi-Fi 2.4G link and the BT link occupy only the first antenna in the tablet computer. In addition, the Wi-Fi 2.4G link and the BT link reuse the first antenna when working simultaneously.

In the foregoing communication scenario, when the tablet computer sends high-definition audio to the Bluetooth headset through the BT link, a bit rate of the high-definition audio is usually high, for example, 990 Kbps. To ensure transmission effect of the high-definition audio, the Bluetooth headset preempts the first antenna. Correspondingly, the tablet computer may significantly increase a proportion of occupying the first antenna by the BT link. For example, a duty cycle of the BT link is increased from 20% to 75%. As a result, a reception and transmission time of the Wi-Fi 2.4G link is greatly shortened, affecting communication of the Wi-Fi 2.4G link, and even causing a serious consequence of a Wi-Fi 2.4G network access failure. Therefore, when detecting that the bit rate of the audio transmitted on the BT link is greater than or equal to the bit rate threshold, the tablet computer switches the Wi-Fi 2.4G link to communication through the second antenna.

Refer to (b) in FIG. 12. After the tablet computer switches the Wi-Fi 2.4G link to the second antenna, the Wi-Fi 2.4G link independently uses the second antenna for communication, and the BT link independently uses the first antenna for communication. The Wi-Fi 2.4G link and the BT link do not affect each other, thereby considering communication effects of both the Wi-Fi 2.4G link and the BT link.

Optionally, after the bit rate of the audio transmitted on the BT link is restored to being less than the bit rate threshold, the Wi-Fi 2.4G link may be switched back to an original state, that is, switched back to the first Wi-Fi 2.4G module and the first antenna to establish the Wi-Fi 2.4G link, to avoid impact of the Wi-Fi 2.4G link on another communication link that uses the second antenna as much as possible.

**Example 3: A third communication link is further adjusted based on Example 2.**

On the basis of Example 2, the first electronic device is further connected to a fourth electronic device through a third communication link, and the third communication link performs communication based on a first connection parameter through the second antenna. It may be understood that, after the first communication link is switched to communication through the second antenna, the first communication link and the third communication link work through the second antenna in a time division multiplexing manner. To mitigate impact of the first communication link on the third communication link, the first electronic device may control the third communication link to perform communication based on a second connection parameter. The first connection parameter is greater than the second connection parameter.

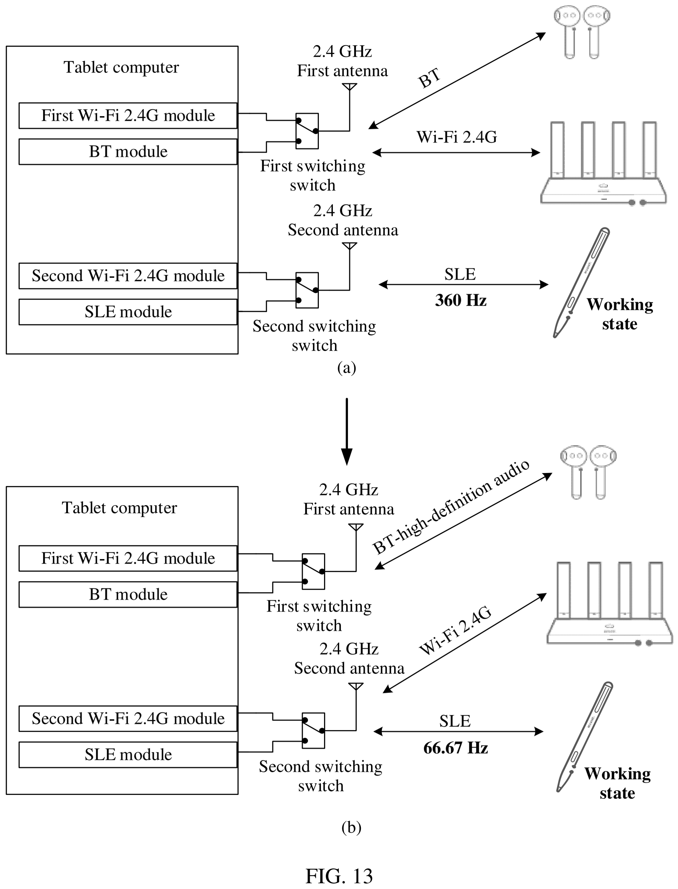

For example, the fourth electronic device is a stylus, and the third communication link is an SLE link between the tablet computer and the stylus. Refer to FIG. 13. In addition to the Wi-Fi 2.4G link and the BT link that are shown in (a) in FIG. 12, the tablet computer further includes an SLE link established by the SLE module with the stylus through a third antenna. In this scenario, after the tablet computer switches the Wi-Fi 2.4G link to the second antenna, the Wi-Fi 2.4G link and the SLE link reuse the second antenna, and the Wi-Fi 2.4G link and the SLE link may affect each other. However, because the tablet computer has only one SLE module, the tablet computer cannot switch the SLE link to another antenna.

Therefore, refer to (a) and (b) in FIG. 13. To reduce mutual impact between the Wi-Fi 2.4G link and the SLE link, when the stylus is in a working state, the tablet computer may appropriately reduce a communication frequency at which the stylus sends pressure-sensitive data to the tablet computer through the SLE link, for example, reduce an original first communication frequency to a second communication frequency, to reserve a sufficient time to ensure basic use experience of the Wi-Fi 2.4G link, and ensure that the SLE link basically works normally. For example, the first communication frequency may be 360 Hz, and the second communication frequency may be 66.67 Hz. An interval corresponding to 360 Hz is 2.78 ms, and an interval corresponding to 66.67 Hz is 15 ms.

It should be noted that, in SLE communication, the electronic device performs communication based on a timing reception and transmission mechanism. Therefore, when the tablet computer adjusts the communication frequency of sending the pressure-sensitive data by the stylus, the stylus needs to negotiate with the tablet computer to adjust an anchor for data reception and transmission.

In an SLE communication process, electronic devices are classified into a management node (namely, a Grant node, a G node for short) and a managed node (namely, a Terminal node, a T node for short). One G node can manage at least one T node, and the G node is connected to the T node to jointly complete a specific communication function. For example, on the SLE link between the tablet computer and the stylus, the tablet computer is usually a G node, and the stylus is usually a T node. When the communication frequency of the SLE link is adjusted, the G and T nodes need to negotiate about a parameter.

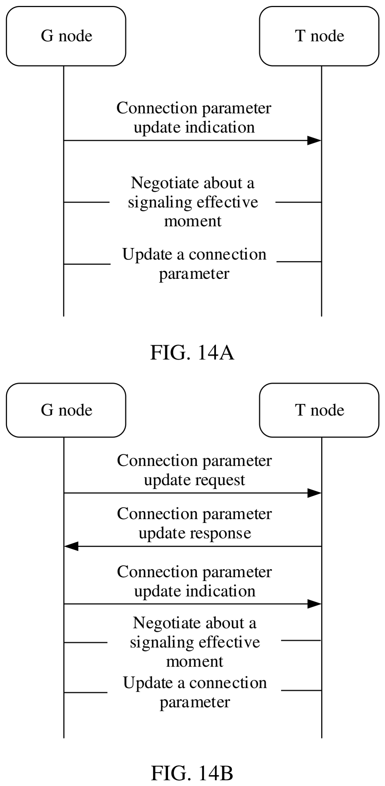

In some embodiments, the node G, as a managing device in a communication link, does not negotiate with the T node, and directly indicates the T node to perform connection parameter updating. The connection parameter updating includes communication frequency updating, interval updating, or the like. For example, refer to FIG. 14A. First, the node G directly sends a connection parameter update indication to the node T, where the connection parameter update indication indicates the node T to update a connection parameter. Then, the node G and the node T negotiate about a signaling effective moment. Finally, the node G and the node T update connection parameters.

In some other embodiments, the node G negotiates with the node T to update the connection parameter. For example, refer to FIG. 14B. First, the node G sends a connection parameter update request to the node T, where the connection parameter update request is used to request the node T to update a connection parameter. Then, the T node sends a connection parameter update response to the node G, where the connection parameter update response represents that the T node agrees to update the connection parameter. Then, the node G sends a connection parameter update indication to the node T, where the connection parameter update indication indicates the node T to update the connection parameter. Then, the node G and the node T negotiate about a signaling effective moment. Finally, the node G and the node T update connection parameters.

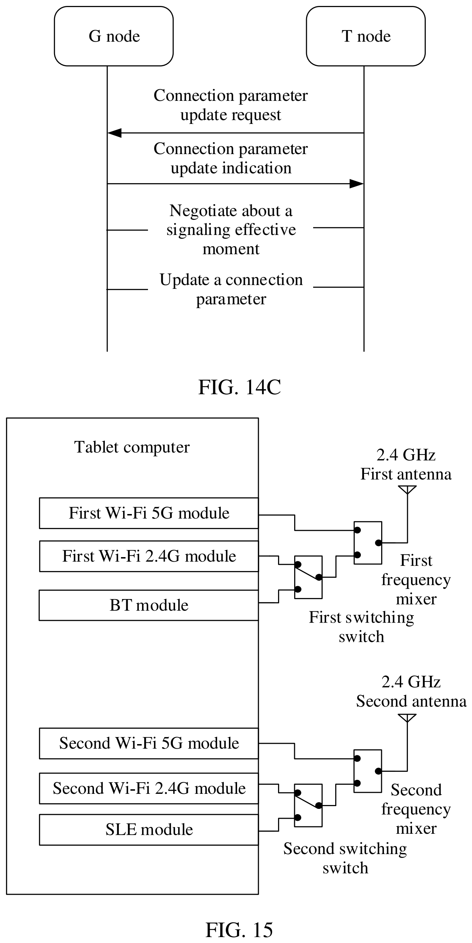

In some other embodiments, the T node requests the G node to update the connection parameter. For example, refer to FIG. 14C. First, the node T sends a connection parameter update request to the node G, where the connection parameter update request is used to request the node G to update a connection parameter. Then, the node G sends a connection parameter update indication to the node T, where the connection parameter update indication indicates the node T to update the connection parameter. Then, the node G and the node T negotiate about a signaling effective moment. Finally, the node G and the node T update connection parameters.

**Manner 2: Adjust a communication protocol for the first communication link, for the first communication link and another communication link to use an antenna in a frequency division multiplexing manner.**

In this embodiment, the first electronic device needs to support the first communication link in using an antenna in a time division multiplexing manner and using an antenna in a frequency division multiplexing manner in terms of hardware. For example, the first electronic device is a tablet computer. Refer to FIG. 15. The tablet computer includes a first Wi-Fi 5G module, a first Wi-Fi 2.4G module, a BT module, a second Wi-Fi 5G module, a second Wi-Fi 2.4G module, an SLE module, a first antenna, and a second antenna.

The first Wi-Fi 5G module is connected to a first frequency mixer, the first Wi-Fi 2.4G module and the BT module are first connected to a first switching switch, and then are connected to the first frequency mixer via the first switching switch, and the first frequency mixer is connected to the first antenna. It may be understood that, based on the foregoing connection relationship, the tablet computer supports in using the first antenna in a time division multiplexing manner by the first Wi-Fi 2.4G module and the BT module, and supports in using the first antenna in a frequency division multiplexing manner by the first Wi-Fi 5G module and the first Wi-Fi 2.4G module or the BT module.

In addition, the second Wi-Fi 5G module is connected to a second frequency mixer, the second Wi-Fi 2.4G module and the SLE module are first connected to a second switching switch, and then are connected to the second frequency mixer via the second switching switch, and the second frequency mixer is connected to the second antenna. It may be understood that, based on the foregoing connection relationship, the tablet computer supports in using the second antenna in a time division multiplexing manner by the second Wi-Fi 2.4G module and the BT module, and supports in using the second antenna in a frequency division multiplexing manner by the second Wi-Fi 5G module and the second Wi-Fi 2.4G module or the SLE module.

The following specifically describes the method provided in this application by using an example in which the first electronic device is the tablet computer shown in FIG. 15, the second electronic device is a router, the third electronic device is a Bluetooth headset, and the fourth electronic device is a stylus. A communication link between the tablet computer and the router is the first communication link, a communication link between the tablet computer and the Bluetooth headset is the second communication link, and a communication link between the tablet computer and the stylus is a third communication link.

**Example 1: The first communication link and the second communication link use the first antenna in a frequency division multiplexing manner.**

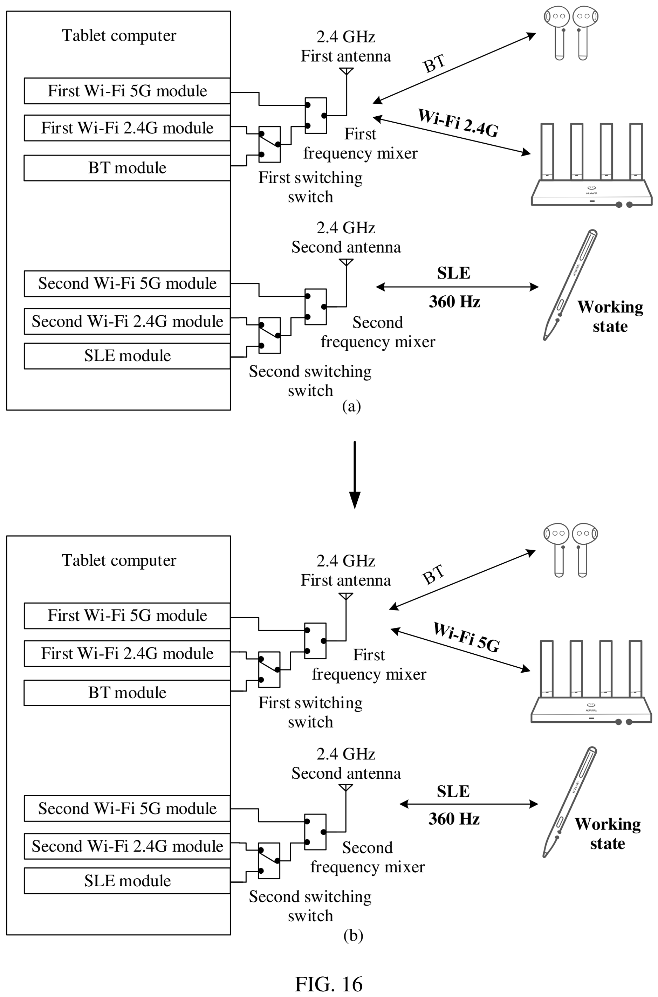

Refer to (a) in FIG. 16. The tablet computer is connected to the router through the first antenna and a Wi-Fi 2.4G link, is connected to the Bluetooth headset through the first antenna and a BT link, and is connected to the stylus through the second antenna and an SLE link. The Wi-Fi 2.4G link and the BT link use the first antenna in a time division multiplexing manner. When the BT link transmits high-definition audio, the Wi-Fi 2.4G link is severely affected. Because the second antenna has been occupied by the SLE link, the Wi-Fi 2.4G link cannot independently use the second antenna. Therefore, to ensure communication quality of the first communication link between the tablet computer and the router, the tablet computer may switch a communication protocol for the first communication link from the Wi-Fi 2.4G communication protocol to the Wi-Fi 5G communication protocol. In other words, the tablet computer replaces the original Wi-Fi 2.4G link with a Wi-Fi 5G link.

Refer to (b) in FIG. 16. After the tablet computer replaces the original Wi-Fi 2.4G link with the Wi-Fi 5G link, the Wi-Fi 5G link and the BT link reuse the first antenna in a frequency division multiplexing manner. The two communication links basically do not affect each other, and communication quality of the two communication links can be considered.

**Example 2: The first communication link and the third communication link use the second antenna in a frequency division multiplexing manner.**

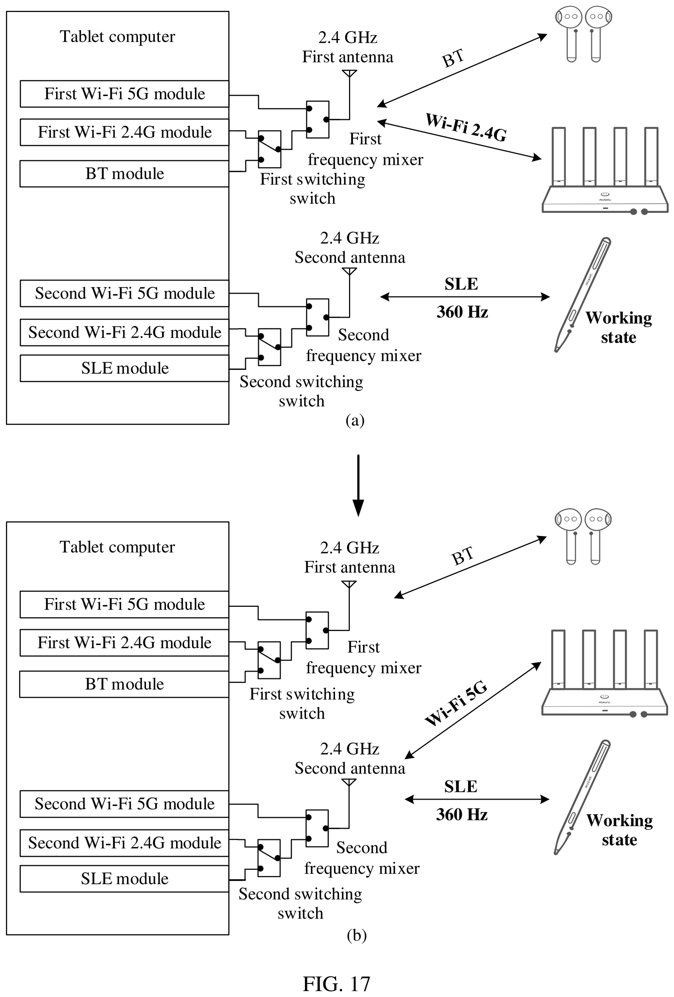

Refer to (a) in FIG. 17. The tablet computer is connected to the router through the first antenna and a Wi-Fi 2.4G link, is connected to the Bluetooth headset through the first antenna and a BT link, and is connected to the stylus through the second antenna and an SLE link. The Wi-Fi 2.4G link and the BT link use the first antenna in a time division multiplexing manner. When the BT link transmits high-definition audio, the Wi-Fi 2.4G link is severely affected. Therefore, when switching the first communication link from the Wi-Fi 2.4G communication protocol to the Wi-Fi 5G communication protocol, the tablet computer may switch the first communication link from the first antenna to the second antenna.

Refer to (b) in FIG. 17. After the tablet computer replaces the original Wi-Fi 2.4G link with the Wi-Fi 5G link, the BT link independently uses the first antenna, and the Wi-Fi 5G link and the SLE link use the second antenna in a frequency division multiplexing manner. The Wi-Fi 5G link and the BT link do not affect each other, and communication quality of the two links can be considered.

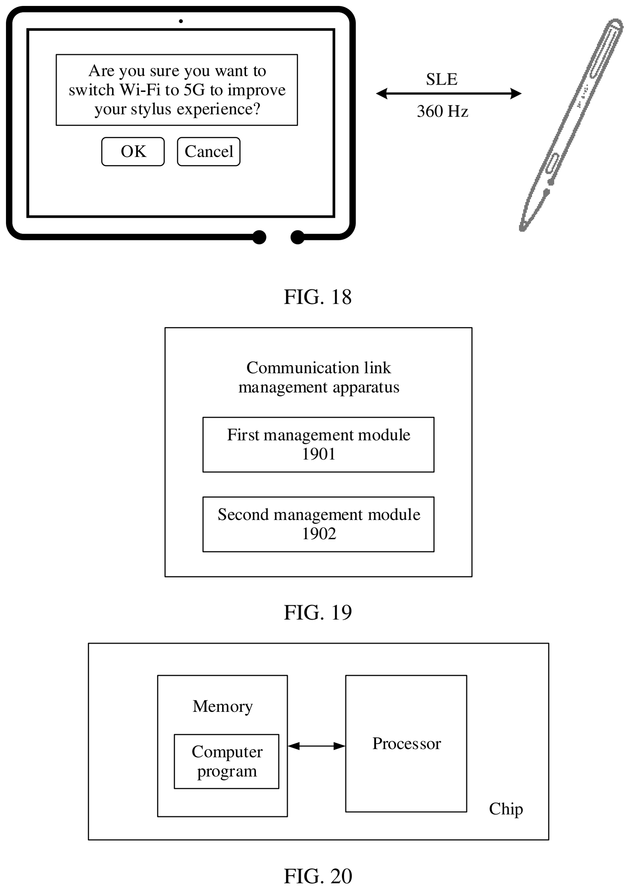

In this embodiment, when switching the communication protocol for the first communication link, the first electronic device may first query a user, and perform switching after the user agrees. For example, refer to FIG. 18. The tablet computer may first display query information, an OK control, and a cancel control, where the query information is used to query whether a user agrees to replace the original Wi-Fi 2.4G link with the Wi-Fi 5G link. In response to an operation performed by the user on the OK control, the tablet computer connects to the router through the Wi-Fi 5G link, and disconnects the original Wi-Fi 2.4G link.

Based on a same concept, as an implementation of the foregoing method, an embodiment of this application provides a communication link management apparatus. The apparatus embodiment corresponds to the foregoing method embodiment. For ease of reading, details in the foregoing method embodiment are not described one by one in this apparatus embodiment. However, it should be clear that the apparatus in this embodiment can correspondingly implement all content of the foregoing method embodiment.

FIG. 19 is a diagram of a communication link management apparatus according to an embodiment of this application. The apparatus includes a first management module 1901 and a second management module 1902.

The first management module 1901 is configured to control a first electronic device to perform communication through both a first communication link and a second communication link, where there is a time division multiplexing antenna on the first communication link and the second communication link, and communication protocols used for the first communication link and the second communication link are different.

The second management module 1902 is configured to manage the first communication link based on a connection parameter of the second communication link, so that there is no time division multiplexing antennas on the managed first communication link and the second communication link.

Optionally, that the second management module 1902 is configured to manage the first communication link based on the connection parameter of the second communication link specifically includes: adjusting, based on the connection parameter of the second communication link, an antenna used for the first communication link, so that there is no for time division multiplexing antennas on the adjusted first communication link and the second communication link; or switching, based on the connection parameter of the second communication link, a communication protocol used for the first communication link, so that the switched first communication link and the second communication link use the antenna in a frequency division multiplexing manner.

Optionally, the first communication link includes a first sub-link and a second sub-link, the first sub-link performs communication through a first antenna, the second sub-link performs communication through the second antenna, and the second communication link performs communication through the second antenna. Correspondingly, that the second management module 1902 is configured to adjust, based on the connection parameter of the second communication link, the antenna used for the first communication link includes: disconnecting the second sub-link in the first communication link when the connection parameter of the second communication link is greater than or equal to a threshold, so that the first communication link does not occupy the second antenna.

Optionally, the second management module 1902 is further configured to: restore the second sub-link in the first communication link when the connection parameter of the second communication link is less than the threshold; or restore the second sub-link in the first communication link after the second communication link is disconnected, to increase a data transmission rate of the second communication link.

Optionally, both the first communication link and the second communication link perform communication through a first antenna; and that the second management module 1902 is configured to adjust, based on the connection parameter of the second communication link, the antenna used for the first communication link includes: when the connection parameter of the second communication link is greater than or equal to the threshold, switching the first communication link from the first antenna to a second antenna for communication, where the first antenna is different from the second antenna.

The second management module 1902 is further configured to: when the connection parameter of the second communication link is restored to being less than the threshold, switch the first communication link from the second antenna back to the first antenna for communication.

Optionally, the first electronic device further includes a third communication link to a fourth electronic device, and the third communication link performs communication based on a first connection parameter through the second antenna. The second management module 1902 is further configured to: after switching the first communication link from the first antenna to the second antenna for communication, control the third communication link to perform communication based on a second connection parameter, where the first connection parameter is greater than the second connection parameter. The method can reduce mutual impact between the first communication link and the third communication link.

Optionally, the second management module 1902 is further configured to: after the first communication link is disconnected, control the third communication link to be restored to perform communication based on the first connection parameter; or after the first communication link is restored to perform communication through the first antenna, control the third communication link to be restored to perform communication based on the first connection parameter.

Optionally, both the first communication link and the second communication link perform communication through a first antenna. That the second management module 1902 is configured to switch, based on the connection parameter of the second communication link, the communication protocol used for the first communication link includes: when the connection parameter of the second communication link is greater than or equal to a threshold, switching the communication protocol used for the first communication link, so that the first communication link and the second communication link use the first antenna in a frequency division multiplexing manner.

Optionally, the first electronic device further includes a third communication link to a third electronic device, and the third communication link performs communication through the second antenna. The second management module 1902 is further configured to: when the connection parameter of the second communication link is greater than or equal to a threshold, switch a communication protocol and an antenna that are used for the first communication link, for the first communication link and the third communication link to the second antenna in a frequency division multiplexing manner.

Optionally, the second management module 1902 is further configured to: display query information, where the query information is used to query whether a user agrees to switch the communication protocol used for the first communication link; and switch, in response to a confirmation operation, the communication protocol used for the first communication link.

Optionally, the connection parameter includes at least one of: a communication frequency, a bit rate, and a communication duty cycle.

Optionally, a priority of the first communication link is lower than a priority of the second communication link.

Optionally, a factor for determining a priority of a communication link includes: a quantity of sub-links on the communication link, and/or a priority of a service processed on the communication link.

An embodiment of this application further provides an electronic device, including a memory, a processor, and a computer program that is stored in the memory and that is runnable on the processor. When the processor executes the computer program, the foregoing method is implemented.

An embodiment of this application further provides a computer-readable storage medium. The computer-readable storage medium stores a computer program. When the computer program is executed by a processor, the foregoing method is implemented.

An embodiment of this application further provides a computer program product. The computer program product stores a computer program. When the computer program is run by an electronic device, the electronic device can be enabled to perform the methods shown in the foregoing embodiments.

An embodiment of this application further provides a chip. Refer to FIG. 20. The chip includes a processor and a memory. The memory stores a computer program. When the computer program is executed by the processor, the foregoing method is implemented.

It should be understood that sequence numbers of the steps do not mean an execution sequence in the foregoing embodiments. The execution sequence of the processes should be determined based on functions and internal logic of the processes, but should not constitute any limitation on the implementation processes of embodiments of this application.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In embodiments provided in this application, division into the frameworks or modules is merely logical function division and may be another division manner during actual implementation. For example, a plurality of frameworks or modules may be combined or integrated into another system, or some features may be ignored or not performed.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

Reference to "one embodiment" or "some embodiments" described in the specification of this application means that one or more embodiments of this application include a specific feature, structure, or characteristic described with reference to the embodiment. Therefore, statements such as "in an embodiment", "in some embodiments", "in some other embodiments", and "in still some other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner.

The foregoing embodiments are merely intended to describe the technical solutions of this application, but are not to limit this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the spirit and scope of the technical solutions of embodiments of this application, and these modifications and replacements shall fall within the protection scope of this application.

## Claims

1. A communication link management method, applied to a first electronic device, wherein the first electronic device is connected to a second electronic device through a first communication link and is connected to a third electronic device through a second communication link; and the method comprises:
performing communication through both the first communication link and the second communication link, wherein there is a time division multiplexing antenna on the first communication link and the second communication link, and communication protocols used for the first communication link and the second communication link are different; and
managing the first communication link based on a connection parameter of the second communication link, so that there is no time division multiplexing antennas on the managed first communication link and the second communication link.

2. The method according to claim 1, wherein managing the first communication link based on the connection parameter of the second communication link comprises:
adjusting, based on the connection parameter of the second communication link, an antenna used for the first communication link, so that there is no time division multiplexing antennas on the adjusted first communication link and the second communication link; and
switching, based on the connection parameter of the second communication link, a communication protocol used for the first communication link, so that the switched first communication link and the second communication link use the antenna in a frequency division multiplexing manner.

3. The method according to claim 2, wherein the first communication link comprises a first sub-link and a second sub-link, the first sub-link performs communication through a first antenna, and the second sub-link performs communication through a second antenna; the second communication link performs communication through the second antenna; and correspondingly, adjusting, based on the connection parameter of the second communication link, the antenna used for the first communication link comprises:
disconnecting the second sub-link in the first communication link when the connection parameter of the second communication link is greater than or equal to a threshold, so that the first communication link does not occupy the second antenna.

4. The method according to claim 3, wherein the method further comprises:
restoring the second sub-link in the first communication link when the connection parameter of the second communication link is less than the threshold; or
restoring the second sub-link in the first communication link after the second communication link is disconnected.

5. The method according to claim 2, wherein both the first communication link and the second communication link perform communication through a first antenna; and correspondingly, adjusting, based on the connection parameter of the second communication link, the antenna used for the first communication link comprises:
when the connection parameter of the second communication link is greater than or equal to a threshold, switching the first communication link from the first antenna to a second antenna for communication, wherein the first antenna is different from the second antenna.

6. The method according to claim 5, wherein the method further comprises:
when the connection parameter of the second communication link is restored to being less than the threshold, switching the first communication link from the second antenna back to the first antenna for communication.

7. The method according to claim 5 or 6, wherein the first electronic device further comprises a third communication link to a fourth electronic device, and the third communication link performs communication based on a first connection parameter through the second antenna; and the method further comprises:
after switching the first communication link from the first antenna to the second antenna for communication, controlling the third communication link to perform communication based on a second connection parameter, wherein the first connection parameter is greater than the second connection parameter.

8. The method according to claim 7, wherein the method further comprises:
after the first communication link is disconnected, controlling the third communication link to be restored to perform communication based on the first connection parameter; or
after the first communication link is restored to perform communication through the first antenna, controlling the third communication link to be restored to perform communication based on the first connection parameter.

9. The method according to claim 2, wherein both the first communication link and the second communication link perform communication through a first antenna; and correspondingly, switching, based on the connection parameter of the second communication link, the communication protocol used for the first communication link comprises:
when the connection parameter of the second communication link is greater than or equal to a threshold, switching the communication protocol used for the first communication link, so that the first communication link and the second communication link use the first antenna in a frequency division multiplexing manner.

10. The method according to claim 1, wherein the first electronic device further comprises a third communication link to a fourth electronic device, and the third communication link performs communication through a second antenna; and the method further comprises:
when the connection parameter of the second communication link is greater than or equal to a threshold, switching a communication protocol and an antenna that are used for the first communication link, so that the first communication link and the third communication link use the second antenna in a frequency division multiplexing manner.

11. The method according to claim 9 or 10, wherein the method further comprises:
displaying query information, wherein the query information is used to query whether a user agrees to switch the communication protocol used for the first communication link; and
switching, in response to a confirmation operation, the communication protocol used for the first communication link.

12. The method according to any one of claims 1 to 11, wherein the connection parameter comprises at least one of: a communication frequency, a bit rate, and a communication duty cycle.

13. The method according to any one of claims 1 to 12, wherein a priority of the first communication link is lower than a priority of the second communication link.

14. The method according to claim 13, wherein a factor for determining a priority of a communication link comprises a quantity of sub-links on the communication link, and/or a priority of a service processed on the communication link.

15. A communication system, comprising a first electronic device, a second electronic device, and a third electronic device, wherein the first electronic device is connected to the second electronic device through a first communication link, and the first electronic device is connected to the third electronic device through a second communication link; and
the first electronic device is configured to:
perform communication through both the first communication link and the second communication link, wherein there is a time division multiplexing antenna on the first communication link and the second communication link, and communication protocols used for the first communication link and the second communication link are different; and
manage the first communication link based on a connection parameter of the second communication link, so that there is no time division multiplexing antennas on the managed first communication link and the second communication link.

16. An electronic device, comprising a memory, a processor, and a computer program that is stored in the memory and that is runnable on the processor, wherein when the processor executes the computer program, the method according to any one of claims 1 to 14 is implemented.

17. A computer-readable storage medium, wherein the computer-readable storage medium stores a computer program, and when the computer program is executed by a processor, the method according to any one of claims 1 to 14 is implemented.

18. A chip, wherein the chip comprises a processor and a memory, the memory stores a computer program, and when the computer program is executed by the processor, the method according to any one of claims 1 to 14 is implemented.
